# FASCICULE DE BREVET EUROPEEN

(11) **EP 4 430 436 B1**
(45) Date de publication et mention de la délivrance du brevet: **10.12.2025**
(21) Numéro de dépôt: 22805843.4
(22) Date de dépôt: 20.10.2022
(51) Int. Cl.: G01V 20/00, G01V 11/00

(54) **PROCEDE POUR EXPLOITER UNE RESSOURCE D'UNE FORMATION SOUTERRAINE, AU MOYEN D'UNE ANALYSE DECISIONNELLE MULTI-CRITERES**
VERFAHREN ZUR EXTRAKTION EINER RESSOURCE AUS EINER UNTERIRDISCHEN FORMATION MITTELS EINER MEHRKRITERIENENTSCHEIDUNGSANALYSE
METHOD FOR EXTRACTING A RESOURCE FROM AN UNDERGROUND FORMATION, BY MEANS OF A MULTI-CRITERIA DECISIONAL ANALYSIS

(30) Priorité: 09.11.2021 FR 2111885
(43) Date de publication de la demande: 18.09.2024
(73) Titulaire: IFP Energies nouvelles, 92500 Rueil-Malmaison (FR); TotalEnergies OneTech, 92400 Courbevoie (FR)
(72) Inventeur: LEBRUN, Lucas, 64018 PAU Cedex (FR); DELBOS, Frederic, 92852 RUEIL-MALMAISON CEDEX (FR); RASOLOFOSAON, Patrick, 92852 RUEIL-MALMAISON CEDEX (FR); DEHGHAN, Kaveh, 64018 PAU Cedex (FR); GOMEZ, Jean-Paul, 64018 PAU Cedex (FR); SICCARDI, Olivier, 64018 PAU cedex (FR)
(74) Mandataire: IFP Energies nouvelles
(86) Numéro de dépôt international: PCT/EP2022/079210
(87) Numéro de publication internationale: WO 2023/083580

(56) Documents cités:
- GAO YONGJIN ET AL: "Application of an analytic hierarchy process to hydrocarbon accumulation coefficient estimation", PETROLEUM SCIENCE, CHINA UNIVERSITY OF PETROLEUM (BEIJING), HEIDELBERG, vol. 7, no. 3, 3 August 2010 (2010-08-03), pages 337 - 346, XP036358796, ISSN: 1672-5107, [retrieved on 20100803], DOI: 10.1007/S12182-010-0075-Z
- KIMBALL SARAH: "Favourability map of British Columbia geothermal resources", 1 September 2010 (2010-09-01), pages 1 - 160, XP055926623, Retrieved from the Internet <URL:https://pics.uvic.ca/sites/default/files/uploads/publications/kimball_thesis_2010.pdf> [retrieved on 20220531]

## Description

### Domaine technique

La présente invention concerne le domaine de l'exploitation d'une ressource d'une formation souterraine de manière générale, telle qu'une ressource géothermique, une ressource pétrolière et/ou gazière, une ressource minière, ou une ressource hydrogéologique.

De manière générale, la présente invention peut être utilisée dans tout domaine nécessitant l'analyse du potentiel d'exploitation d'une ressource d'une formation souterraine.

Afin de répondre aux enjeux de la transition énergétique, le marché mondial de la production géothermique est appelé à doubler dans les dix années à venir. La ressource géothermique exploite le gradient géothermique naturel de la Terre (c'est-à-dire l'augmentation de la température avec la profondeur) qui peut être très variable en fonction des sites. Ainsi, pour capter l'énergie géothermique, on fait circuler un fluide dans le sous-sol, à plus ou moins grandes profondeurs en fonction de la température désirée et selon le gradient thermique local. Ce fluide peut être naturellement présent dans la roche (aquifère) ou bien être volontairement injecté dans le sous-sol. Le fluide se réchauffe au contact des roches du sous-sol et remonte, chargé de calories (énergie thermique), qui sont transmises dans un échangeur de chaleur. Puis le fluide est réinjecté dans le milieu, une fois refroidi et après filtrage. Préalablement à toute exploitation géothermique, il convient de déterminer dans un premier temps si une formation souterraine donnée est adaptée ou non à une telle exploitation, et si tel est le cas, dans un deuxième temps, de définir le schéma d'exploitation de la ressource géothermique présente dans la formation souterraine choisie, notamment le positionnement des puits injecteurs et producteurs, formant des doublets, à forer.

L'exploration pétrolière consiste à rechercher des gisements d'hydrocarbures au sein d'un bassin sédimentaire. La démarche générale de l'évaluation du potentiel pétrolier d'un bassin sédimentaire comporte des allers-retours entre une prédiction du potentiel pétrolier du bassin sédimentaire, réalisée à partir d'informations mesurées relatives au bassin étudié grâce aux analyses d'affleurements, aux campagnes sismiques, aux forages par exemple, et des forages d'exploration dans les différentes zones présentant le meilleur potentiel, afin de confirmer ou infirmer le potentiel prédit préalablement, et d'acquérir de nouvelles informations permettant de préciser les prédictions de potentiel pétrolier du bassin étudié. L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation pour ces zones, à forer des puits d'exploitation et, de façon générale, à mettre en place les infrastructures de production nécessaires au développement du gisement.

Ainsi, de manière générale, quel que soit le type de ressource considéré, préalablement à toute exploitation, il convient de déterminer si une formation souterraine donnée présente un potentiel d'exploitation suffisant par rapport à des objectifs prédéfinis (par exemple en termes de quantité ou de volume de la ressource, de la qualité de la ressource, des risques) et de déterminer son schéma d'exploitation (notamment l'emplacement des infrastructures à mettre en œuvre pour atteindre les objectifs). Cela implique un grand volume de données à analyser, qui plus est de différente nature (géologique, géochimique, sédimentologique, sismique, diagraphique, etc) et de prendre en compte un grand nombre de critères d'évaluation pour sélectionner une formation souterraine et/ou définir le meilleur schéma d'exploitation. Ainsi, la prise de décision en vue de l'exploitation d'une ressource d'une formation souterraine est un processus complexe impliquant l'analyse de données très variées pour répondre à des objectifs multiples formalisés par des critères.

### Technique antérieure

Les documents suivants seront cités au cours de la description :
- Abdel Zaher, M., Elbarbary, S., El-Shahat, A., Mesbah, H., & Embaby, A. (2018). Geothermal resources in Egypt integrated with GIS-based analysis. Journal of Volcanology and Geothermal Research, 365, 1-12.
- Chen, T. and Guestrin, C., 2016, August. Xgboost: A scalable tree boosting system. In Proceedings of the 22nd acm sigkdd international conference on knowledge discovery and data mining (pp. 785-794). https://dl.acm.org/doi/pdf/10.1145/2939672.2939785.
- Gao, Y., Liu, L., Liu, H., Zheng, F., Wu, L., Zhou, J., & Qu, D. (2010). Application of an analytic hierarchy process to hydrocarbon accumulation coefficient estimation. Petroleum Science, 7(3), 337-346. DOI 10.1007/s12182-010-0075-z.
- Kimball, S. (2010). Favourability map of British Columbia geothermal resources. MS thesis dissertation. University of British Columbia . DOI:10.14288/1.0071365
- Moghaddam. M.K.. Samadzadegan. F.. Noorollahi. Y.. Sharifi. M.A.. Itoi. R. [2014]. Spatial analysis and multi-criteria decision making for regional-scale geothermal favorability map. Geothermics 50. 189-201.
- Natekin, A. and Knoll, A., 2013. Gradient boosting machines, a tutorial. Frontiers in neurorobotics, 7, p.21. https://doi.org/10.3389/fnbot.2013.00021
- Noorollahi, Y., Itoi, R., Fujii, H., & Tanaka, T. (2007). GIS model for geothermal resource exploration in Akita and Iwate prefectures, northern Japan. Computers & Geosciences, 33(8), 1008-1021.
- Osman, A.I.A., Ahmed, A.N., Chow, M.F., Huang, Y.F. and El-Shafie, A., 2021. Extreme gradient boosting (Xgboost) model to predict the groundwater levels in Selangor Malaysia. Ain Shams Engineering Journal, 12(2), pp.1545-1556. https://doi.org/10.1016/j.asej.2020.11.011
- Saaty. R.W. (1987) The Analytic Hierarchy Process-What It Is and How It Is Used. Mathematical Modelling 9(3). 161-76.
- Svozil, D., Kvasnicka, V. and Pospichal, J., 1997. Introduction to multi-layer feedforward neural networks. Chemometrics and intelligent laboratory systems, 39(1), pp.43-62. https://doi.org/10.1016/S0169-7439(97)00061-0.

On connaît depuis plusieurs décennies des méthodes mises en œuvre par ordinateur permettant une analyse décisionnelle multi-critères automatisée, aussi appelées 'méthodes MCDA', de l'anglais 'Multi-Decision Criteria Analysis'. Ces méthodes permettent de structurer des problèmes complexes et de considérer de multiples critères de manière explicite afin d'aboutir à des décisions rationnelles et systématiques, tenant compte de l'ensemble des données disponibles et critères.

Dans le domaine de la géothermie, on connait notamment les documents (Kimball, 2010 ; Moghaddam et al., 2014) qui permettent de générer des cartes dites de 'prospectivité' (prospectivity map' en anglais). On appelle carte de prospectivité une carte représentative du potentiel d'exploitation de la ressource considérée en des points de la formation souterraine. Généralement, ce potentiel d'exploitation est représenté sous la forme de notes, par exemple les notes peuvent varier de 0 à 5, la valeur 5 (respectivement la valeur 0) représentant une zone de la formation souterraine à fort potentiel d'exploitation (respectivement à faible potentiel d'exploitation), réparties en fonction des positions spatiales en deux dimensions à la surface de la formation (carte 2D ou bidimensionnelle). Mais on peut aussi obtenir une notation du potentiel d'exploitation dans le volume de la formation, par exemple par la génération de cartes de prospectivité pour une pluralité de profondeurs de la formation en tenant compte de la profondeur de la formation comme troisième dimension (cartes multi-2D ou volume 3D). De telles cartes permettent de déterminer les zones 2D (surfaces en deux dimensions) ou 3D (volumes) les plus propices à l'exploitation de la ressource considérée.

De manière générale, la méthode d'analyse décisionnelle multi-critères fait intervenir trois concepts principaux, à savoir un objectif (par exemple, choisir le meilleur site à prospecter), les différents critères éventuellement contradictoires (par exemple, le volume et la qualité de la ressource) et les alternatives (par exemple, les différents emplacements des puits à forer).

Compte tenu de l'objectif, l'application de la méthode MCDA consiste à noter les différentes alternatives en tenant compte des critères.

Parmi les méthodes MCDA, on connait plus particulièrement une méthode d'analyse hiérarchique multi-critères ou méthode d'Analyse Hiérarchique des Procédés (aussi connue sous le terme de 'méthode AHP', de l'anglais 'Analytical Hierarchy Process') décrite dans le document (Saaty, 1987). Cette méthode d'analyse hiérarchique multi-critères, particulièrement facile de mise en œuvre, consiste à décomposer le problème global en une hiérarchie de sous-problèmes, qui sont analysés deux à deux.

Le document Gao, 2010, concerne l'application d'une méthode AHP pour estimer un coefficient d'accumulation d'hydrocarbures. Un système d'accumulation d'hydrocarbures est évalué quantitativement en établissant un modèle de structure hiérarchique basé sur une méthode AHP. Une combinaison d'accumulation d'hydrocarbures est divisée en six systèmes d'accumulation d'hydrocarbures.

On connait notamment une mise en œuvre de la méthode AHP à la ressource géothermique, par exemple décrite dans le document (Kimball, 2010). Dans ce cadre, elle est appliquée sur des données spatiales, la dépendance spatiale étant implicitement contenue par les coordonnées géographiques (longitude et latitude) de chaque point de mesure. Notamment, cette mise en œuvre comporte, à partir de mesures de propriétés réalisées en des positions éparses de la formation souterraine, les étapes suivantes :
(i) : interpolation des propriétés mesurées (par exemple la porosité, la densité de fracture, le flux de chaleur, etc.) sur une grille ou attribution d'un rayon d'influence (ou 'bufferisation' ou 'buffering ' en anglais) à chaque point de mesure de la propriété afin de constituer une grille pour laquelle tout point (en fait toute cellule de la grille) est renseignée avec une valeur pour chacune des propriétés considérées. Chaque propriété est alors considérée comme un facteur et chaque cellule de la grille est alors considérée comme une alternative pour l'application de la méthode AHP ;
(ii) : attribution pour chaque facteur (par exemple la porosité, le gradient de température, le flux de chaleur) d'une note sur une échelle de 0 à 5, en fonction de l'importance à donner à ce facteur dans la prise de décision ; cette étape est aussi classiquement appelée étape de 'reclassement' (en anglais 'reclassification') ;
(iii) : comparaison des facteurs deux à deux (c'est-à-dire entre chaque couple de facteurs) afin d'attribuer à chacun de ces facteurs un coefficient de pondération normalisé, la normalisation imposant que la somme de ces coefficients soit égale à l'unité, ce coefficient quantifiant l'importance relative de chaque facteur, et
(iv) : pour chaque alternative, c'est-à-dire pour chaque point (ou cellule ou cellule) de la grille, attribution d'une note globale égale à la somme des notes attribuées à chaque facteur pondérées par les coefficients de pondération associés à chaque facteur.

Toutefois, de telles approches souffrent de trois inconvénients majeurs de manière générale :
(i) la bufferisation ou l'interpolation des mesures éparses qui induit une résolution spatiale faible (aspect de pixellisation) ;
(ii) l'absence de prise en compte de contraintes/facteurs géologiques pour définir les poids relatifs quantifiant l'importance des critères de décision (la géologie étant intégrée comme un simple critère supplémentaire, telle que la porosité ou la densité de fracture) ;
(iii) l'absence d'une carte de fiabilité, c'est-à-dire d'une carte d'incertitudes, pour la prévision de la prospectivité.

La présente invention permet de pallier ces inconvénients. Notamment, la présente invention définit des coefficients de pondération, intervenant dans l'analyse multi-critères, fonction de contraintes géologiques, ce qui améliore la qualité de la décision prise à l'issue de l'analyse multi-critères. De plus, la présente invention peut faire appel à une méthode de régression pour renseigner les valeurs des propriétés en tout point d'une grille, ce qui améliore la résolution spatiale des données en entrée de l'analyse multi-critères. Enfin de manière optionnelle, le procédé selon l'invention peut produire une carte d'incertitudes, ce qui permet de quantifier la qualité de la carte de prospectivité produite.

### Résumé de l'invention

La présente invention concerne un procédé pour exploiter une ressource présente dans une formation souterraine, dans lequel au moins les étapes suivantes sont appliquées :
a) on mesure des grandeurs physiques en des points de mesure de ladite formation au moyen de capteurs et on en déduit des valeurs de propriétés relatives à ladite formation en lesdits points de mesure ;
b) à partir desdites valeurs desdites propriétés relatives à ladite formation en lesdits points de mesure, on construit une représentation maillée représentative de ladite formation, chaque cellule de ladite représentation maillée comportant une valeur de chacune desdites propriétés ;
c) pour chacune desdites propriétés et en chaque cellule de ladite représentation maillée, on détermine une note représentative de la pertinence de la valeur de ladite propriété en ladite cellule pour l'exploitation de ladite ressource, à partir de critères prédéfinis pour chacune desdites propriétés ;
d) on détermine des ensembles de cellules de ladite représentation maillée en fonction d'une contrainte géologique variable spatialement, et on applique une méthode d'analyse hiérarchique des procédés pour chacun desdits ensembles de cellules afin de déterminer, pour chacun desdits ensembles de cellules, un ensemble de coefficients de pondération représentatifs de la pertinence relative de chacune desdites propriétés pour l'exploitation de ladite ressource dans lesdites cellules dudit ensemble de cellules ;
e) en chaque cellule de ladite représentation maillée, on détermine une note représentative du potentiel d'exploitation de ladite ressource comme étant égale à la somme des notes représentatives de la pertinence desdites valeurs desdites propriétés en ladite maille pour l'exploitation de ladite ressource et pondérées par lesdits coefficients de pondération dudit ensemble de coefficients de pondération déterminés pour lesdites propriétés et pour ledit ensemble de cellules auquel appartient ladite cellule ;
f) à partir au moins desdites notes représentatives du potentiel d'exploitation déterminées en chacune des cellules de ladite représentation maillée, on détermine un schéma d'exploitation de ladite ressource et on exploite ladite ressource selon ledit schéma d'exploitation.

Selon une mise en œuvre de l'invention, ladite méthode d'apprentissage automatique supervisé peut être choisie parmi la liste suivante : une méthode d'amplification de gradient, une méthode d'amplification extrême de gradient, un réseau de neurones à propagation avant, et un réseau de neurones convolutif.

Selon une mise en œuvre de l'invention, lesdites mesures desdites grandeurs physiques peuvent comprendre au moins des mesures diagraphiques et des mesures sismiques.

Selon une mise en œuvre de l'invention selon laquelle ladite ressource est une ressource géothermique, lesdites propriétés peuvent comprendre au moins un gradient thermique et un flux de chaleur.

Selon cette mise en œuvre de l'invention, on peut préférentiellement déterminer lesdits ensembles de cellules à partir d'une carte géologique relative à ladite formation, et de telle manière que la lithologie soit invariante dans chaque cellule d'un ensemble de cellules.

Selon une mise en œuvre de l'invention selon laquelle ladite ressource est une ressource gazière et/ou pétrolière, lesdites propriétés peuvent comprendre au moins une porosité et une perméabilité.

Selon cette mise en œuvre de l'invention, on peut préférentiellement déterminer lesdits ensembles de cellules à partir d'une carte de la distribution des hydrocarbures dans ladite formation, et de telle manière que la distribution des hydrocarbures soit invariante dans chaque cellule d'un ensemble de cellules.

Selon une mise en œuvre de l'invention, à l'étape b), lesdites valeurs en chaque cellule d'au moins une desdites propriétés peuvent être déterminées au moyen d'une méthode d'apprentissage automatique supervisé.

Selon une mise en œuvre de l'invention, à l'étape f), on peut déterminer un schéma d'exploitation de ladite ressource comprenant au moins une implantation d'au moins un puits injecteur et/ou d'au moins un puits producteur, et on peut exploiter ladite ressource de ladite formation souterraine au moins en forant lesdits puits de ladite implantation et en les équipant d'infrastructures d'exploitation.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre au moins des étapes b) à e) du procédé tel que décrit ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 présente une carte de prospectivité déterminée au moyen du procédé selon l'invention, et la figure 2 présente une carte de prospectivité déterminée au moyen d'un procédé selon l'art antérieur.
La figure 3 présente la différence entre une carte de prospectivité déterminée par le procédé selon l'invention et une carte de prospectivité déterminée par une modification du procédé selon l'invention dans laquelle la contrainte géologique est invariable spatialement. La figure 4 présente la carte géologique de la province de Colombie Britannique.

### Description des modes de réalisation

L'invention concerne un procédé pour exploiter une ressource d'une formation souterraine, telle qu'une ressource géothermique, une ressource pétrolière et/ou gazière, une ressource minière, ou une ressource hydrogéologique.

La formation souterraine étudiée peut être à toute profondeur, et notamment être peu profonde (par exemple inférieure à 3 km, comme majoritairement dans le cas d'une ressource géothermique, hydrogéologique ou minière), ou profonde voire ultra-profonde et éventuellement sous une couche d'eau (comme majoritairement dans le cas d'une ressource pétrolière et/ou gazière et dans le cas de la géothermie profonde).

Selon une mise en œuvre de l'invention, le procédé pour exploiter une ressource d'une formation souterraine peut comprendre au moins les étapes suivantes :
**1) Mesures de grandeurs physiques relatives à la formation**
**2) Construction d'une représentation maillée de la formation**
**3) Reclassification en chaque cellule et pour chaque propriété**
**4) Application d'une méthode AHP en fonction d'une contrainte géologique**
**5) Détermination d'une note représentative du potentiel d'exploitation de la ressource**
**6) Détermination d'une carte d'incertitudes**
**7) Exploitation de la ressource**

Le procédé selon l'invention comprend au moins les étapes 1) à 5) ainsi que l'étape 7), et l'étape 6) est optionnelle. Les étapes 1) à 7) sont détaillées ci-après.

### 1) Mesures de grandeurs physiques relatives à la formation

Au cours de cette étape, il s'agit de mesurer des grandeurs physiques en des points de mesure de la formation au moyen de capteurs, et on en déduit des valeurs de propriétés relatives à la formation en ces points de mesure.

Selon une mise en œuvre de l'invention, les mesures de grandeurs physiques comprennent au moins des mesures diagraphiques et des mesures sismiques. Avantageusement, les mesures de grandeurs physiques peuvent aussi comprendre des mesures réalisées sur des affleurements, des analyses pétrophysiques et/ou géochimiques de carottes prélevées in situ.

Par mesures diagraphiques, on entend des mesures réalisées dans au moins un puits foré dans la formation, au moyen d'un dispositif ou sonde diagraphique se déplaçant le long du puits pour mesurer une grandeur physique relative à la formation géologique proche du puits. Selon une mise en œuvre de l'invention, les grandeurs physiques mesurées peuvent comprendre la résistivité électrique, la radioactivité gamma naturelle, la polarisation spontanée. Les mesures diagraphiques permettent d'estimer par exemple le contenu en eau et en hydrocarbures à chaque pas de mesure dans le puits, la lithologie dominante (ou faciès lithologique) et notamment le contenu en sable et/ou en argile des roches traversées, mais également le pendage et l'épaisseur des couches. Toutefois, la mesure diagraphique est une mesure locale, le long du puits et d'extension latérale limitée.

Par mesures sismiques, on entend des mesures réalisées au moyen d'un dispositif d'acquisition de mesures sismiques, comprenant de manière classique au moins une source sismique (par exemple un canon à eau en sismique marine, ou un camion vibrateur en sismique terrestre) pour générer des ondes sismiques dans la formation souterraine et une pluralité de récepteurs d'ondes sismiques (tels que des accéléromètres, des hydrophones) placés de manière à enregistrer au moins des ondes sismiques s'étant réfléchies sur des contrastes d'impédance (tels que des surfaces d'érosion, des limites d'unités stratigraphiques).

De manière classique le dispositif d'acquisition sismique est mobile de manière à couvrir une large zone (2D ou 3D) à la surface de la formation. Les mesures sismiques permettent notamment d'estimer la géométrie des différentes couches géologiques de la formation souterraine à grande échelle.

Selon une mise en œuvre de l'invention particulière selon laquelle la ressource à exploiter est de nature géothermique, les mesures de grandeurs physiques peuvent comprendre des mesures de température au moyen d'un thermomètre et/ou des mesures de flux de chaleur au moyen d'un capteur de flux placés dans des puits.

De manière non limitative, les capteurs peuvent en outre consister en des préleveurs et analyseurs de fluide, des préleveurs et analyseurs de carottes ou de tout échantillon prélevé.

Selon l'invention, à partir de ces mesures, on détermine des propriétés relatives à la formation souterraine étudiée. Il est bien clair que l'on détermine de préférence, à partir de ces mesures, des propriétés pertinentes pour l'estimation du potentiel d'exploitation de la ressource présente dans la formation. Selon une mise en œuvre de l'invention, les propriétés relatives à la formation souterraine étudiée comprennent au moins l'épaisseur et la géométrie des couches géologiques de la formation et leur nature lithologique (par exemple grès, argiles, calcaire etc). Avantageusement, on peut en outre déterminer la porosité des couches géologiques, leur perméabilité, ou encore la présence de failles ou de fractures. On peut aussi déterminer des informations sur les propriétés des fluides présents dans le bassin, telles que des valeurs de saturation en les différents fluides présents dans le bassin. Également, on peut estimer des gradients de température dans les puits, ou encore des flux de chaleur.

De manière plus particulière dans une mise en œuvre selon laquelle la ressource à exploiter est de nature géothermique, les propriétés relatives à la formation peuvent comprendre :
- la localisation des sources chaudes et/ou les températures de l'eau associées, et/ou
- la localisation des volcans et/ou leurs types et objets associés, par exemple, une caldeira, une coulée pyroclastique, un stratovolcan, volcan subglaciaire, et/ou
- la localisation des fractures et/ou failles, et/ou
- la nature du substratum, qu'il soit sédimentaire, volcanique, métamorphique, ultramafique, intrusive, ou autre, et/ou
- le gradient de température et/ou de flux de chaleur dans les puits.

Avantageusement, selon une mise en œuvre selon laquelle la ressource à exploiter est de nature géothermique, les propriétés relatives à la formation peuvent comprendre au moins un gradient thermique et un flux de chaleur.

De manière plus particulière dans une mise en œuvre selon laquelle la ressource à exploiter est de nature pétrolière et/ou gazière, les propriétés relatives à la formation peuvent comprendre :
a) des propriétés relatives à la roche mère telles que des propriétés choisies parmi :
   ∘ le type de matière organique (lacustre, terrestre, marine, etc), son épaisseur et sa teneur en matière organique ;
   ∘ la localisation de suintements ou de nappes de pétrole, qui sont des indicateurs de la présence de systèmes pétroliers actifs
   ∘ des indices de maturité thermique ;
   ∘ le type de migration des hydrocarbures impliquée, que ce soit une migration primaire (expulsion du pétrole de la roche mère à grains fins), une migration secondaire (déplacement du pétrole à travers un lit porteur ou une faille à grains grossiers vers un réservoir ou suintement) ou encore une migration tertiaire (déplacement du pétrole d'un piège à un autre ou suintement), et les volumes impliqués ; et/ou
b) Des propriétés relatives au réservoir telles que des propriétés choisies parmi :
   ∘ L'épaisseur relative du niveau producteur par rapport à l'épaisseur totale du réservoir ;
   ∘ La lithologie, par exemple sable, carbonates, etc. ;
   ∘ La porosité ;
   ∘ La perméabilité ; et/ou
c) Des propriétés relatives à la couverture du réservoir telles que des propriétés choisies parmi :
   ∘ La lithologie du toit de la couverture : argiles, etc. ;
   ∘ L'épaisseur de la couverture ;
   ∘ Les principales failles ;
   ∘ Les pressions de fluide ;
   ∘ La tendance à la fracturation (en anglais 'fracture trend') ; et/ou
d) Des propriétés relatives au contexte structural de la formation telles que des propriétés choisies parmi :
   ∘ Les principales failles ;
   ∘ Les principaux éléments structuraux, les pièges structuraux les plus courants étant les anticlinaux, les replis de strates qui apparaissent comme des régions en forme de V inversé sur les plans horizontaux des cartes géologiques ;
   ∘ Les niveaux hauts et les niveaux bas (en anglais 'Highs and Lows') ;
   ∘ La chronologie des principaux événements de la géologie structurale.

Avantageusement, selon une mise en œuvre selon laquelle la ressource à exploiter est de nature pétrolière et/ou gazière, les propriétés relatives à la formation peuvent comprendre au moins une porosité et une perméabilité.

A l'issue de cette étape, on obtient donc, à partir des mesures de grandeurs physiques réalisées en différents points de mesure de la formation, des valeurs de propriétés relatives à la formation souterraine étudiée en ces points de mesure.

### 2) Construction d'une représentation maillée de la formation

Au cours de cette étape, à partir des valeurs des propriétés relatives à la formation en les points de mesure, il s'agit de construire une représentation maillée de ladite formation, chaque cellule de la représentation maillée comportant une valeur de chacune desdites propriétés. Selon une mise en œuvre préférée de l'invention, les valeurs en chaque cellule d'au moins une des propriétés considérées sont déterminées au moyen d'une méthode d'apprentissage automatique supervisé, la méthode d'apprentissage étant entrainée à partir des valeurs des propriétés aux points de mesure.

De manière générale, une représentation maillée d'une formation souterraine est une sorte de maquette de la formation étudiée, représentée généralement sur ordinateur sous la forme d'un maillage ou grille, chacune des cellules de cette grille comportant une ou plusieurs valeurs de propriétés relatives à la formation (par exemple la lithologie, la perméabilité, la porosité, la saturation en un fluide, etc.).

Selon une mise en œuvre préférée de l'invention, la représentation maillée de la formation est bidimensionnelle et ses axes sont dans un plan horizontal. Autrement dit, dans cette mise en œuvre, on représente les valeurs des propriétés relatives à la formation en des cellules correspondant à des coordonnées (X, Y) qui peuvent être des coordonnées géographiques ou des coordonnées dans un repère local dans un plan horizontal. Il s'agit d'un mode de représentation très courant dans le domaine de l'exploitation d'une ressource, et qui s'explique par le fait que de telles analyses étaient réalisées de manière visuelle par le passé, l'analyse de multiples propriétés sur une représentation 2D étant plus facile à réaliser que l'analyse de multiples propriétés dans une représentation 3D. Pour une telle représentation, on représente en quelque sorte les valeurs des propriétés de la formation, quelles que soient leurs profondeurs, comme si elles étaient à la surface de la formation. Une telle représentation maillée est aussi communément appelée « carte », ou « carte 2D ».

Selon une mise en œuvre préférée de l'invention, la représentation maillée de la formation est tridimensionnelle. Autrement dit, dans cette mise en œuvre, on représente les valeurs des propriétés relatives à la formation en des cellules correspondant à des coordonnées (X, Y, Z), les coordonnées (X, Y) pouvant être des coordonnées géographiques ou des coordonnées dans un repère local dans un plan horizontal, et Z étant la profondeur. A noter qu'une telle représentation peut être vue comme formée par une pluralité de représentations bidimensionnelles dans une direction donnée, par exemple formée par une pluralité de représentations bidimensionnelles correspondant chacune à une profondeur Z de la représentation tridimensionnelle. Une telle représentation maillée peut être aussi appelée « cartes multi-2D ».

De manière générale, les mesures à partir desquelles on déduit des valeurs des propriétés relatives à une formation souterraine sont réalisées en des points de mesure le plus souvent épars. Cela est notamment particulièrement vrai pour les propriétés issues des mesures diagraphiques (par exemple la porosité), qui sont limitées au niveau des puits dans lesquels les mesures ont été réalisées.

Selon une mise en œuvre de l'invention, afin de générer une représentation maillée comportant en chaque cellule une valeur des propriétés relatives à la formation, on peut interpoler les valeurs des propriétés relatives à une formation souterraine en les points de mesure.

Alternativement, on peut appliquer une méthode par rayon d'influence (méthode connue sous le terme de 'bufferisation', de l'anglais 'buffering') aux valeurs des propriétés relatives à une formation souterraine en les points de mesure. La méthode par rayon d'influence consiste, pour un point de mesure donné, à appliquer la valeur de la propriété en ce point de mesure à l'intérieur d'une zone d'influence prédéfinie, et, à l'extérieur de la zone d'influence, à faire décroitre la valeur de la propriété suivant une loi en 1/r par exemple, où r désigne la distance du centre de la zone d'influence au point considéré.

Toutefois, lorsque les points de mesure sont particulièrement irréguliers et rares, la prédiction des valeurs d'une propriété en des points éloignés des points de mesure est le plus souvent peu représentative de la variabilité spatiale réelle de la propriété considérée au moyen d'une interpolation ou de la méthode par rayon d'influence.

Selon une mise en œuvre préférée de l'invention, on applique une méthode d'apprentissage automatique supervisé pour au moins une des propriétés relatives à la formation afin de déterminer des valeurs de la propriété considérée en chaque cellule de la représentation maillée, la méthode d'apprentissage automatique supervisé appliquée pour une propriété donnée étant entrainée sur une base d'apprentissage comprenant les valeurs de la propriété considérée aux points de mesure issues de l'étape 1). Autrement dit, l'objectif est ici, par un apprentissage supervisé, de déterminer un modèle permettant de prédire des valeurs de la propriété considérée en toutes les cellules de la représentation maillée, à partir de valeurs de la propriété en les points de mesure. Une telle méthode permet d'obtenir des meilleures prédictions et une meilleure résolution spatiale que les méthodes classiques d'interpolation ou de bufferisation, en particulier lorsque les données sont réparties de manière irrégulières et/ou sont éparses.

Avantageusement, la base d'apprentissage de la méthode d'apprentissage automatique supervisé peut être découpée en 2, de préférence 3, sous-ensembles :
- un premier sous-ensemble, comprenant par exemple entre 70% à 80% de l'ensemble des données de la base d'apprentissage, destiné à l'apprentissage de la méthode d'apprentissage automatique supervisé : ces données vont directement déterminer la mesure d'erreur d'estimation du réseau et la façon d'ajuster les valeurs des paramètres du modèle ; c'est la base de données d'entrainement ("training set" en anglais).
- un deuxième sous-ensemble, comprenant par exemple entre 10% et 15% de l'ensemble des données de la base d'apprentissage, est utilisé pour ajuster les variables appelées hyper paramètres, qui contrôlent la façon dont le modèle est appris ; c'est la base de données de validation.
- de manière optionnelle mais avantageuse, un troisième sous-ensemble, comprenant un nombre de données issues de la base d'apprentissage dans une proportion équivalente à la base de données de validation, destiné à tester la performance d'apprentissage, à la fin de l'apprentissage ; c'est la base de données de test. Il est important qu'aucune observation des données d'entrainement et de validation ne soit incluse dans les données de test. Les données de test fournissent alors une évaluation impartiale d'un ajustement final du modèle.

Selon une mise en œuvre de l'invention, pour constituer les sous-ensembles décrits ci-dessus, on peut réaliser un tirage aléatoire parmi l'ensemble des données de la base d'apprentissage.

Ainsi, au cours de cette étape, on recherche les valeurs des paramètres de la méthode d'apprentissage supervisé permettant de minimiser un écart entre les données d'apprentissage (valeurs des propriétés aux point de mesure) et une estimation (ou encore une prédiction) de ces données par cet algorithme. Il s'agit d'un problème de régression.

Selon une mise en œuvre de l'invention, on peut utiliser une méthode d'amplification de gradient (en anglais 'Gradient Boosting') en tant qu'algorithme d'apprentissage supervisé. L'amplification de gradient (en anglais 'Gradient Boosting'), dont on peut trouver une description dans le document (Natekin et Knoll, 2013), utilise deux concepts, à savoir l'apprentissage automatique ensembliste (en anglais 'Ensemble Machine Learning') et le renforcement de l'apprentissage automatique (en anglais 'Machine Learning Boosting'). Dans l'apprentissage automatique ensembliste les modèles d'apprentissage sont ajustés aux données individuellement ou combinés dans un ensemble. L'ensemble est une combinaison de modèles individuels simples qui créent ensemble un nouveau modèle plus puissant. Par ailleurs le renforcement de l'apprentissage automatique est une méthode particulière de création d'ensembles de la manière suivante. Tout d'abord cela commence par l'ajustement aux données d'un modèle initial (par exemple par régression linéaire ou arbre de décision). Puis le modèle suivant est construit de manière à rendre plus précise la prédiction des cas où le premier modèle fonctionne mal. La combinaison de ces deux modèles est meilleure que l'un ou l'autre des deux modèles précédents pris séparément. Ce processus dit de renforcement est répété plusieurs fois, chaque modèle successif essayant de corriger les lacunes dans les prédictions des modèles combinés précédents. Enfin, l'amplification de gradient (en anglais 'Gradient Boosting') est un type particulier de renforcement de l'apprentissage automatique (en anglais 'Machine Learning Boosting'). Le principe général repose sur le fait que le meilleur modèle suivant possible, lorsqu'il est combiné avec les modèles précédents, minimise l'erreur globale de prédiction. La dénomination 'amplification de gradient' vient du fait que les résultats cibles pour chaque cas sont définis en fonction du gradient de l'erreur par rapport à la prédiction. Plus précisément, chaque nouveau modèle fait un pas dans la direction qui minimise l'erreur de prédiction, dans l'espace des prédictions possibles pour chaque cas d'apprentissage.

Selon une autre mise en œuvre de l'invention, on peut utiliser une méthode d'amplification extrême de gradient (en anglais 'XGBoost' ou 'Extreme Gradient Boosting') en tant qu'algorithme d'apprentissage supervisé. L'amplification extrême de gradient, dont on trouvera une description dans le document (Osman et al., 2021 ; Chen et Guestrin, 2016), est, comme son nom l'indique, une variante plus sophistiquée de l'amplification de gradient utilisant une combinaison de techniques d'optimisation pour obtenir des résultats supérieurs en utilisant moins de ressources informatiques dans un temps étonnamment plus court. Les améliorations algorithmiques reposent sur quatre axes, à savoir la régularisation (la méthode pénalise les modèles complexes par la régularisation pour éviter le surapprentissage (en anglais 'overfitting')), la sensibilité à la parcimonie (la méthode admet naturellement des données d'entrée éparses en 'apprenant' automatiquement les meilleure valeurs manquantes en fonction de la perte d'entrainement et gère plus efficacement différents modèles de parcimonie dans les données), le schéma de quantile pondéré (en anglais 'Weighted Quantile Sketch'), pour l'apprentissage approximatif des arbres de décision, autrement dit pour trouver efficacement les points de division optimaux parmi les ensembles de données pondérées), et la validation croisée (l'algorithme utilise une méthode de validation croisée intégrée à chaque itération, ce qui évite la programmation explicite de cette recherche et la spécification du nombre exact d'itérations d'amplification de gradient requises en une seule exécution).

Selon une autre alternative, on peut utiliser un réseau de neurones à propagation avant (en anglais Feedforward Neural Network') en tant qu'algorithme d'apprentissage supervisé. Ce type de réseau de neurones a la caractéristique de ne pas présenter de boucles ('loop' en anglais). Plus précisément, dans ce réseau dont on pourra trouver une description dans le document (Svozil et al., 1997), l'information ne se déplace que dans une seule direction, vers l'avant, à partir des nœuds d'entrée, en passant par les couches cachées (le cas échéant) et vers les nœuds de sortie. Il n'y a pas de cycles ou de boucles dans le réseau, contrairement à ce qui se passe par exemple dans les réseaux de neurones récurrents (en anglais 'Recurrent Neural Network'). Le réseau de neurones à propagation avant est le type de réseaux neuronaux pour apprentissage profond le plus simple et le plus courant.

Selon une mise en œuvre de l'invention, on peut utiliser un réseau de neurones convolutif en tant qu'algorithme d'apprentissage supervisé. Cet algorithme d'apprentissage supervisé présente l'avantage de présenter plusieurs couches convolutives, qui permettent d'identifier, de manière de plus en plus précise d'une couche à une autre, des tendances ('trends' en anglais) particulières contenues dans les données. Selon cette mise en œuvre, on recherche les valeurs des paramètres du réseau de neurones convolutif permettant de minimiser un écart entre les données d'apprentissage (valeurs des propriétés aux points de mesure) et une estimation (ou encore une prédiction) de ces données par cet algorithme. Il s'agit d'un problème de régression, qui peut être résolu de manière itérative, par exemple par une méthode de gradient. Plus précisément, selon cette conception, on recherche de manière itérative les valeurs des paramètres du réseau de neurones minimisant l'écart décrit ci-dessus, jusqu'à atteindre un critère d'arrêt. Le critère d'arrêt peut porter sur une valeur maximale de l'écart (par exemple au sens des moindres carrés), un nombre d'itérations maximale, etc. Les paramètres d'un réseau de neurones convolutif comprennent les poids synaptiques et les biais de la fonction d'activation.

Selon une mise en œuvre de l'invention, on peut rechercher les paramètres du réseau de neurones en définissant :
- une mesure de l'erreur d'estimation du réseau de neurones convolutif (égale à la différence entre une donnée et une estimation par le réseau de neurones convolutif), par exemple en définissant une fonction de perte ("loss function" en anglais). Selon une mise en œuvre de l'invention, on peut définir une fonction de perte mesurant une erreur au sens des moindres carrés ("mean squared error" en anglais) ; et
- la manière dont les paramètres du réseau de neurones sont ajustés (par exemple par rétro-propagation du gradient) en fonction de la mesure de l'erreur d'estimation choisie, par exemple en choisissant un optimiseur et son taux d'apprentissage ("learning rate" en anglais). Par exemple, on peut utiliser un optimiseur de type Nadam (pour "Nesterov-accelerated Adaptive Moment Estimation" en anglais), par exemple mis en œuvre avec un taux d'apprentissage ("learning rate") de 0.002 et une réduction automatique du taux d'apprentissage (par exemple sur atteinte d'un plateau, avec les paramètres suivants : un contrôleur ("monitor" en anglais) de type erreur absolue moyenne ("mean absolute error" en anglais), avec un facteur de 0.1, et un critère d'arrêt délibéré ("early stopping patience" en anglais) de 3.
- une mesure de la qualité de l'apprentissage (ou encore une métrique; "metrics" en anglais), réalisée sur la base de données de validation lorsque celle-ci a été créée. On peut choisir par exemple une métrique de type erreur moyenne absolue ("mean absolute error" en anglais) avec un critère d'arrêt délibéré ("early stopping patience" en anglais) de 30.

Avantageusement, le réseau de neurones convolutif mis en œuvre dans l'invention peut comprendre :
- des fonctions d'activation de type ReLU (pour "Rectified Linear Unit" en anglais), qui sont des fonctions linéaires par morceaux ; et/ou
- au moins 3 à 5 couches convolutives, de manière à obtenir un modèle précis, dans ce cas, on parle d'architecture profonde ; et/ou
- une couche intermédiaire, dite de regroupement (ou "pooling" en anglais), placée entre au moins deux couches convolutives. Une telle couche permet de réduire la taille des motifs, tout en préservant leurs caractéristiques principales.

Selon une conception particulière de l'invention, le réseau de neurones convolutif peut être composé de 7 couches au total :
- 3 couches convolutives, dont le nombre de filtres est de 32 ou 64, le nombre de "strides" (chevauchement) est de 3 ou 5, et la fonction d'activation est de type ReLU. Ces couches ont la propriété d'identifier des motifs localement dans le tenseur de données reçu en entrée ; si ces motifs se trouvent à différentes échelles et à différentes positions, alors la couche convolutive est capable de les isoler si cela permet de réduire l'erreur de prédiction ; le nombre de filtres détermine la variété de motifs que le réseau peut identifier ; les premières couches du réseau identifient des motifs généraux tandis que les dernières couches identifient des motifs caractéristiques ;
- chaque couche convolutive est immédiatement suivie d'une couche dite de regroupement (ou "pooling" en anglais). Une telle couche a la propriété de sous-échantillonner les données afin de permettre à la couche convolutive suivante de traiter les données à une échelle plus large. A noter que la dernière couche de ce type est une couche dite de "GLOBALMAXPOOLING", qui permet de réduire l'information d'une dimension.
- la couche finale est une couche dense (entièrement connectée) qui récupère toutes les caractéristiques du réseau et produit l'estimation du quantificateur pour les données en entrée ; la sortie de cette couche est un nombre réel (scalaire).

Avantageusement, on peut ajouter une huitième couche entre la dernière couche de "pooling" c'est-à-dire la couche de "GLOBALMAXPOOLING" et la couche dense, afin de limiter le surapprentissage du réseau (en anglais "overfitting"), il s'agit d'une couche dite de "DROPOUT" dont on peut définir un taux (par exemple un taux de 0.25) qui représente la proportion d'unités parmi les entrées qui sont aléatoirement mises à zéro. Selon cette conception, le nombre total de paramètres du réseau de neurones à calibrer peut-être de l'ordre de 20000.

Avantageusement, on peut appliquer une méthode d'apprentissage automatique supervisé pour chacune des propriétés relatives à la formation considérées, afin de déterminer des valeurs de la propriété considérée en chaque cellule de la représentation maillée. Cela permet d'obtenir des valeurs de propriétés prédites plus fiables et avec une meilleure résolution spatiale pour l'ensemble des propriétés considérées.

Alternativement, on peut appliquer une méthode d'apprentissage automatique supervisé pour au moins un sous-ensemble des propriétés relatives à la formation considérées (par exemple les propriétés pour lesquelles les points de mesure sont les plus irréguliers et/ou les plus épars et/ou les plus pertinentes pour l'exploitation de la ressource), et on peut appliquer une méthode d'interpolation ou une méthode de bufferisation pour les propriétés restantes. En appliquant une méthode d'apprentissage automatique supervisé lorsque cela est nécessaire uniquement, cela permet de limiter le temps de restitution global du procédé selon l'invention.

Selon une mise en œuvre de l'invention selon laquelle la ressource à exploiter est de nature géothermique, on peut utiliser une méthode de régression par apprentissage automatique supervisé pour des propriétés telles que le gradient de température et le flux de chaleur, et on utilise une méthode par zone d'influence pour des propriétés telles que la température des sources chaudes et le type de volcans.

Selon une mise en œuvre de l'invention selon laquelle la ressource à exploiter est de nature pétrolière et/ou gazière, on peut utiliser une méthode de régression par apprentissage automatique supervisé pour des propriétés telles que l'épaisseur relative du niveau producteur, la porosité et la perméabilité, et on utilise une méthode par zone d'influence pour des propriétés telles que la localisation de suintements ou de nappes de pétrole.

Ainsi, à l'issue de cette étape, on obtient une représentation maillée de la formation, chaque cellule de la représentation maillée comportant une valeur de chacune des propriétés considérées.

### 3) Reclassification en chaque cellule et pour chaque propriété

Au cours de cette étape, pour chacune des propriétés et en chaque cellule de la représentation maillée, on détermine une note représentative de la pertinence de la valeur de la propriété en ladite cellule pour l'exploitation de la ressource, à partir de critères prédéfinis pour chacune des propriétés. Une note représentative de la pertinence de la valeur de la propriété en ladite cellule pour l'exploitation de la ressource représente un dicateur du potentiel d'exploitation de la ressource. En effet, les propriétés ne sont pas directement comparables entre elles (par exemple une perméabilité et un flux de chaleur), et encore moins les valeurs d'une propriété comparées aux valeurs d'une autre. Il s'agit ici en quelque sorte de définir une échelle de valeurs commune à toutes les propriétés pour pouvoir les comparer rationnellement entre elles. Cette étape est aussi appelée 'reclassement' ('reclassification' en anglais).

Selon une mise en œuvre de l'invention, on peut définir des notes comprises dans une gamme allant de 0 à 5, et attribuer une valeur de 5 (respectivement une valeur de 0) en une cellule pour laquelle la valeur de la propriété considérée est très favorable (respectivement très peu favorable) à l'exploitation de la ressource. Par exemple dans le cas d'une ressource géothermique, on peut attribuer une note de 5 dans une cellule pour laquelle la valeur du gradient de température est supérieure à 80°C/km dans cette même cellule, car une telle valeur est un indicateur très favorable à une exploitation géothermique, et inversement, on peut attribuer une note de 0 dans une cellule pour laquelle la valeur du gradient de température est inférieure à 0.001°C/km dans cette même cellule, car une telle valeur est un indicateur très peu favorable à une exploitation géothermique.

Alternativement, on peut définir des notes comprises dans une gamme allant de 0 à 3, 0 à 10, de 0 à 20 ou de 0 à 100.

Selon une mise en œuvre de l'invention selon laquelle la ressource à exploiter est de nature géothermique, on peut utiliser des critères prédéfinis dans la littérature, comme par exemple dans les documents (Kimball, 2010 ; Noorollahi, et al., 2007 ; Abdel Zaher, M., et al. 2018).

Selon une mise en œuvre de l'invention selon laquelle la ressource à exploiter est de nature géothermique, on peut utiliser des critères prédéfinis tels que décrits dans les tableaux 1 à 6 ci-dessous, qui établissent des notes en fonction de gammes de valeurs pour des propriétés particulières que sont le gradient de température, le flux de chaleur, la température de la source chaude, le type de volcan, la géologique du substratum rocheux, la densité de fractures.

**[Table 1]**

| Gradient de Temperature (°C/km) | Note |
|---|---|
| 0-0,001 | 0 |
| 0,001-20 | 1 |
| 20-40 | 2 |
| 40-60 | 3 |
| 60-80 | 4 |
| >80 | 5 |

**[Table 2]**

| Flux de chaleur (mW/m²) | Note |
|---|---|
| 0-1 | 0 |
| 1-80 | 1 |
| 80-90 | 2 |
| 90-100 | 3 |
| 100-110 | 4 |
| >110 | 5 |

**[Table 3]**

| Temperature de la source chaude (°C) | Note |
|---|---|
| 0-1 | 0 |
| 1-20 | 1 |
| 20-40 | 2 |
| 40-60 | 3 |
| 60-80 | 4 |
| >80 | 5 |

**[Table 4]**

| Type de volcan | Note |
|---|---|
| Absence de volcans | 0 |
| Pyroclastiques et cônes de cendres | 1 |
| Champs volcaniques basaltiques, volcan sous-glaciaire | 2 |
| Volcan bouclier | 3 |
| Stratovolcan ou champ volcanique | 4 |
| Volcan complexe ou Caldera | 5 |

**[Table 5]**

| Géologie du substratum rocheux | Note |
|---|---|
| 0-0 | 0 |
| Roches sédimentaires, intrusifs mésozoïques et plus anciens, roches métamorphiques et ultramafiques, et roches volcaniques oligocènes et plus anciennes | 1 |
| Intrusifs cénozoïques et plus jeunes, roches volcaniques du Miocène | 2 |
| Bassins sédimentaires, Roches volcaniques du Pliocène | 3 |
| Roches volcaniques du Pleistocene | 4 |
| Roches volcaniques de l'Holocene | 5 |

**[Table 6]**

| Densité fracture (line/km²) | Note |
|---|---|
| 0-10⁻⁷ | 0 |
| 10⁻⁷ | 1 |
| 5 10⁻⁷ | 2 |
| 10⁻⁶ | 3 |
| 10⁵ | 4 |
| Supérieur à 10 ⁵ | 5 |

Selon une mise en œuvre de l'invention selon laquelle la ressource à exploiter est de nature pétrolière et/ou gazière, on peut utiliser des critères prédéfinis dans la littérature, comme par exemple dans le document (Gao et al., 2010).

Ainsi, cette étape permet de rendre les valeurs des propriétés comparables entre elles, de manière rationnelle et cohérente.

### 4) Application d'une méthode AHP en fonction d'une contrainte géologique

Au cours de cette étape, on détermine une pluralité d'ensembles de cellules en fonction d'une contrainte géologique variable spatialement prédéfinie, et on applique une méthode d'analyse hiérarchique des procédés pour chacun de ces ensembles de cellules. A l'issue de cette étape, on obtient pour chacun des ensembles de cellules, un ensemble de coefficients de pondération (préférentiellement normalisés) représentatifs de la pertinence relative de chacune des propriétés pour l'exploitation de la ressource dans les cellules de l'ensemble de cellules considéré. Il est bien clair qu'un ensemble de cellules peut être formé de cellules qui ne sont pas nécessairement voisines entre elles.

Autrement dit, on délimite des zones de la formation souterraine en fonction d'une contrainte géologique variable spatialement, et on applique une méthode AHP pour chacune de ces zones. Pour chaque zone, et donc pour chaque cellule de chaque zone, on obtient un coefficient de pondération pour chaque propriété, permettant de quantifier l'importance d'une propriété donnée par rapport aux autres propriétés dans l'objectif poursuivi qui est d'exploiter la ressource.

Ainsi, alors que dans l'art antérieur on détermine un coefficient de pondération invariable spatialement pour une propriété donnée (c'est-à-dire que l'on détermine un coefficient de pondération constant quelle que soit la cellule considérée), dans la présente invention, on applique en quelque sorte un filtre spatial contraint géologiquement, pour déterminer des coefficients de pondération variables en fonction de la position de la cellule.

Selon une mise en œuvre de l'invention selon laquelle la ressource à exploiter est de nature géothermique, la contrainte géologique variable spatialement peut être définie à partir d'une carte géologique relative à la formation. Une carte géologique ('map of the bedrock geology' en anglais) est une carte représentant la distribution de faciès lithologiques, ou encore la distribution des différents types de roches présents à la surface d'une formation souterraine. Selon une mise en œuvre de l'invention, à partir d'une carte géologique relative à la formation, on définit une pluralité d'ensembles de cellules dans lesquels, dans chaque ensemble de cellules, la lithologie est invariante. Selon une mise en œuvre de l'invention, on peut déterminer un premier ensemble de cellules correspondant aux cellules dans lesquelles le substratum est de type intrusif, métamorphique ou ultramafique, un deuxième ensemble de cellules correspondant aux cellules dans lesquelles le substratum est de type sédimentaire, et un troisième ensemble de cellules correspondant aux cellules dans lesquelles le substratum est de type volcanique.

Selon une mise en œuvre de l'invention selon laquelle la ressource à exploiter est de nature pétrolière et/ou gazière, la contrainte géologique variable spatialement peut être définie à partir de cartes de la distribution de la roche mère (type, contenu en matière organique, épaisseur et potentiel génératif), et/ou des suintements/nappes de pétrole (indiquant la présence de systèmes pétroliers actifs), et/ou des indices de maturité thermique des hydrocarbures, et/ou de la migration des hydrocarbures . Cette carte est appelée carte de charge (en anglais 'Charge map'). Selon une mise en œuvre, à partir de telles cartes de distribution, on définit une pluralité d'ensembles de cellules dans lesquels la distribution considérée est invariante.

La méthode d'Analyse Hiérarchique des Procédés, aussi appelée 'Processus Hiérarchique Analytique', 'Processus de Hiérarchisation Analytique', 'Analyse multicritère hérarchique' ou 'Procédure Hiérarchique d'analyse' et connue sous le terme de 'méthode AHP' (de l'anglais 'Analytical Hierarchy Protocol') fait partie de la famille des méthodes d'analyse multi-critères (aussi connues sous l'acronyme 'MCDA', de l'anglais 'Multi-Decision Criteria Analysis'). La méthode AHP a été décrite pour la première fois dans le document (Saaty, 1987).

Cette méthode d'analyse multi-critères consiste à décomposer le problème global en une hiérarchie de sous-problèmes, qui sont analysés deux à deux. De manière générale, dans cette méthode, on appelle 'alternatives' les solutions du problème décisionnel, 'critères' ou 'facteurs' les paramètres sur lesquels sont évaluées les alternatives, et sous-critères ou sous-facteurs les paramètres appartenant à un critère et sur lesquels sont évaluées les alternatives. Dans le cadre de la mise en œuvre de la méthode AHP pour le procédé selon l'invention, les propriétés relatives à la formation correspondent aux facteurs de la méthode AHP, les positions des cellules correspondent aux alternatives de la méthode AHP.

De manière générale, au moyen de la méthode AHP, on construit une matrice de jugement qui comprend un coefficient de pondération pour chaque couple de facteurs comparés, autrement dit, dans le cadre de la mise en œuvre de la méthode AHP pour le procédé selon l'invention, pour chaque couple de propriétés comparées.

Avantageusement, les coefficients de pondération déterminés par la méthode AHP sont normalisés.

Selon l'invention, on applique la méthode AHP pour chaque ensemble de cellules déterminé selon la contrainte géologique variable spatialement telle que décrite ci-dessus. Autrement dit, on compare les facteurs deux à deux afin d'attribuer à chacun des facteurs un coefficient de pondération, de préférence normalisé, quantifiant l'importance relative de chaque facteur.

Selon une mise en œuvre de l'invention selon laquelle la ressource à exploiter est de nature géothermique, et que l'on a déterminé trois ensembles de cellules correspondant à un substratum intrusif/métamorphique/ultramafique, un substratum sédimentaire et un substratum volcanique tel que décrit ci-dessus, on peut obtenir par la méthode AHP les coefficients de pondération décrits dans le tableau 7, quantifiant l'importance relative de chaque facteur (c'est-à-dire de chaque propriété dans le cas présent) pour les trois types de substratum. Ainsi, par exemple dans le cas d'un substratum sédimentaire, on attribue la plus forte importance aux propriétés 'flux de chaleur' et 'gradient de température', et une importance moindre aux propriétés 'type de volcans' et 'température de la source chaude', la propriété 'densité de fractures' ayant un coefficient de pondération intermédiaire par rapport aux quatre autres propriétés.

**[Table 7]**

| Substratum rocheux | Flux de chaleur | Gradient de température | Température de la source chaude | Type de Volcans | Densité de fractures |
|---|---|---|---|---|---|
| Intrusif, métamorphique & ultramafique | 0,308 | 0,308 | 0,089 | 0,089 | 0,206 |
| Sédimentaire | 0,350 | 0,350 | 0,081 | 0,081 | 0,138 |
| Volcanique | 0,202 | 0,202 | 0,291 | 0,212 | 0,093 |

Ainsi, à l'issue de cette étape, on obtient un coefficient de pondération pour chacune des propriétés considérées et en chaque cellule, ce coefficient quantifiant la pertinence d'une propriété donnée par rapport aux autres en vue de l'exploitation de la ressource. De plus, les coefficients de pondération associés à chaque propriété ne sont pas uniformes sur toute la zone d'étude, comme il est supposé conventionnellement, mais dépendent directement de la géologie. En d'autres termes, la géologie n'est pas considérée comme un simple facteur, comme la densité de fracture ou la porosité, mais plutôt comme un « filtre » qui délimite des zones où la comparaison par paires des propriétés est similaire. A chacune de ces zones 'géologiques' est associé un 'filtre' spatial de délimitation géographique et un jeu de coefficient de pondération des différents facteurs.

### 5) Détermination d'une note représentative du potentiel d'exploitation de la ressource

Au cours de cette étape, en chaque cellule de la représentation maillée, on détermine une note représentative du potentiel d'exploitation de la ressource comme étant égal à la somme des notes attribuées à chacune des propriétés (à l'issue de l'étape 3) et pondérées par les coefficients de pondération variables spatialement déterminés pour chacune des propriétés considérées en la cellule considérée (à l'issue de l'étape 4).

La répartition des notes représentatives du potentiel d'exploitation de la ressource en fonction de la position des cellules est classiquement appelée 'carte de prospectivité' ('prospectivity map' en anglais). Une telle carte permet d'appréhender les régions de la formation qui présente le meilleur potentiel pour l'exploitation de la ressource.

### 6) Détermination d'une carte d'incertitudes

Au cours de cette étape, qui est optionnelle, on réitère les étapes 4) et 5) pour une pluralité de modèles de régression issus de l'étape 3) d'application de la méthode d'apprentissage automatique supervisé, par exemple pour les dix meilleurs modèles issus de l'étape 3). On obtient alors des notes représentatives du potentiel d'exploitation de la ressource en chaque cellule de la représentation maillée et pour chaque modèle de régression.

Puis, pour chaque cellule, on détermine un écart-type des notes représentatives du potentiel d'exploitation de la ressource obtenues pour chaque modèle de régression en la cellule considérée.

La répartition des écarts-types des notes représentatives du potentiel d'exploitation de la ressource en fonction de la position des cellules est classiquement appelée 'carte d'incertitudes'. Une telle carte permet d'appréhender la fiabilité des notes représentatives du potentiel d'exploitation de la ressource prédites par le procédé selon l'invention.

### 7) Exploitation de la ressource

Au cours de cette étape, à partir au moins des notes représentatives du potentiel d'exploitation de la ressource déterminées en chacune des cellules de la représentation maillée, on détermine un schéma d'exploitation de ladite ressource et on exploite la ressource selon le schéma d'exploitation.

Selon une mise en œuvre de l'invention selon laquelle la ressource à exploiter est de nature géothermique, il s'agit de déterminer au moins un schéma d'exploitation permettant l'injection d'un fluide essentiellement aqueux dans la formation souterraine étudiée, et sa récupération. En effet, dans le domaine de la géothermie, on exploite la chaleur ou encore l'énergie du fluide injecté dans la formation et récupéré.

Selon une mise en œuvre de l'invention selon laquelle la ressource à exploiter est de nature pétrolière et/ou gazière, il s'agit de déterminer au moins un schéma d'exploitation des hydrocarbures contenus dans la formation souterraine étudiée.

De manière générale, au moins dans le domaine géothermique et pétrolier, un schéma d'exploitation comprend un nombre, une géométrie et une implantation, position et espacement, des puits injecteurs et/ou producteurs à forer dans la formation souterraine étudiée et à équiper.

Dans le domaine pétrolier et/ou gazier, un schéma d'exploitation peut en outre comprendre un type de récupération assistée des hydrocarbures contenus dans la formation souterraine, telle qu'une récupération au moyen de l'injection d'une solution comprenant un ou des polymères, de la mousse de CO₂, etc. Un schéma d'exploitation optimal d'une formation souterraine comportant des hydrocarbures doit par exemple permettre un fort taux de récupération des hydrocarbures piégés dans la formation souterraine, sur une longue durée d'exploitation, et nécessitant un nombre de puits limité. Autrement dit, le spécialiste prédéfinit des critères d'évaluation selon lesquels un schéma d'exploitation du fluide d'une formation souterraine est considéré comme suffisamment performant pour être mis en œuvre sur la formation souterraine étudiée.

Selon une mise en œuvre de l'invention selon laquelle la ressource à exploiter est de nature géothermique ou pétrolière, la détermination du schéma d'exploitation de la ressource de la formation souterraine étudiée peut être réalisée à l'aide d'un simulateur d'écoulement, tel que le simulateur PumaFlow^{®} (IFP Energies nouvelles, France). Selon un mode de mise en œuvre de l'invention, on peut définir différents schémas d'exploitation de la ressource contenu dans la formation souterraine étudiée et on estime, à l'aide du simulateur d'écoulement, au moins un critère permettant d'évaluer la qualité de ces schémas d'exploitation.

Selon un mode de mise en œuvre dans le domaine pétrolier et/ou gazier, le critère d'évaluation peut être la quantité d'hydrocarbures produits selon chacun des différents schémas d'exploitation, la courbe représentative de l'évolution de la production dans le temps au niveau de chacun des puits, le rapport huile sur gas (GOR), etc. Le schéma selon lequel les hydrocarbures contenus dans la formation souterraine sont réellement exploités peut alors correspondre à celui satisfaisant au moins un des critères d'évaluation des différents schémas d'exploitation. Selon une mise en œuvre de l'invention, on réalise une pluralité de simulations d'écoulement pour une pluralité d'implantations de puits injecteurs-producteurs, au moyen du simulateur selon l'invention, et on sélectionne l'implantation satisfaisant au moins un des critères d'évaluation prédéfinis. Avantageusement, on peut en outre réaliser une pluralité de simulations d'écoulement pour une pluralité de type de récupération assistée, au moyen du simulateur selon l'invention en chacune des cellules de la représentation maillée, et on détermine le schéma d'exploitation selon lequel exploiter les hydrocarbures pour chacune des types de récupération assistée, et on sélectionne la récupération assistée satisfaisant au moins un des critères d'évaluation prédéfinis. Puis, une fois le schéma d'exploitation déterminé, les hydrocarbures piégés dans la formation souterraine sont exploités en fonction de ce schéma d'exploitation, notamment au moins en forant les puits injecteurs et producteurs du schéma d'exploitation ainsi déterminés, et en installant les infrastructures nécessaires à l'exploitation de la ressource. Dans le cas où le schéma d'exploitation a en outre été déterminé en estimant la production du réservoir associée à différents types de récupération assisté, on injecte dans le puits injecteur le ou les types d'additifs (polymère, tensio-actifs, mousse de CO₂) sélectionné tel que décrit ci-dessus.

Selon un mode de mise en œuvre selon lequel la ressource à exploiter est de nature géothermique, le critère d'évaluation peut être l'énergie ou la température du fluide produit selon chacun des différents schémas d'exploitation, la quantité de fluide produit selon chacun des différents schémas d'exploitation, etc. Le schéma selon lequel le fluide est exploité à des fins géothermiques peut alors correspondre à celui satisfaisant au moins un des critères d'évaluation des différents schémas d'exploitation. Selon un mode de réalisation de l'invention, on peut réaliser une pluralité de simulations d'écoulement pour une pluralité d'implantations de puits injecteurs-producteurs, au moyen d'un simulateur d'écoulement, et on sélectionne le schéma d'exploitation satisfaisant au moins un des critères d'évaluation prédéfinis.

Une fois le schéma d'exploitation déterminé, on fore les puits injecteurs et producteurs du schéma d'exploitation ainsi déterminés, et on installe les infrastructures nécessaires à l'exploitation de la ressource.

Il est bien entendu qu'un schéma d'exploitation peut être évolutif sur la durée d'une exploitation, en fonction des connaissances relatives à la formation souterraine acquises pendant l'exploitation, des améliorations dans les différents domaines techniques intervenant lors d'une exploitation (améliorations dans le domaine du forage, de la récupération assistée par exemple).

Au moins une partie des étapes du procédé selon l'invention, notamment les étapes 2) à 6), peuvent être mises en œuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer des résultats.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre au moins des étapes 2) à 6) du procédé pour exploiter une ressource présente dans une formation souterraine tel que décrit ci-dessus, lorsque ledit programme est exécuté sur un ordinateur.

### Exemples

Les caractéristiques et avantages du procédé selon l'invention apparaîtront plus clairement à la lecture de l'exemple d'application ci-après.

Le procédé selon l'invention est appliqué dans le cadre de l'exploitation d'une ressource géothermique, située dans la province Canadienne de la Colombie Britannique. Les mesures réalisées comprennent des mesures de gradient de température et de flux de chaleur, réalisées dans des puits de pétrole dans le bassin sédimentaire de l'Ouest canadien au nord-est, et de puits d'exploration géothermique occasionnels localisés en dehors de ce bassin. Les propriétés relatives à la formation comprennent en outre le type de volcanisme, la température des sources chaudes, le type de substratum, et la densité de fractures.

Les critères prédéfinis utilisés à l'étape 3 pour attribuer une note à chaque propriété et en chaque cellule de la représentation maillée correspondent à ceux des tableaux 1 à 6 ci-dessus. Les critères géologiques variables spatialement utilisés à l'étape 5 sont déterminés à partir d'une carte géologique classique de la Colombie Britannique.

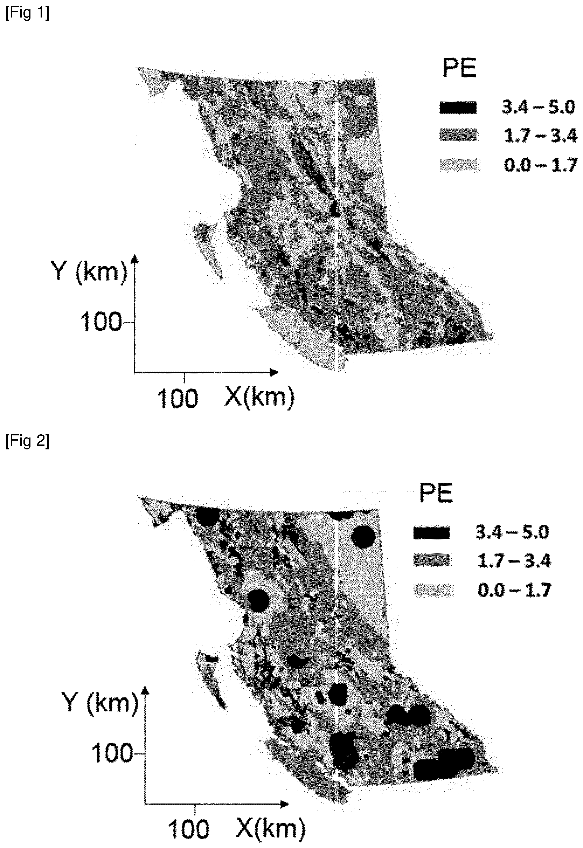

La figure 1 présente une carte de prospectivité, plus précisément le potentiel d'exploitation PE en fonction de la position (X,Y) à la surface de la formation, obtenue au moyen du procédé selon l'invention, et la figure 2 présente une carte de prospectivité PE obtenue au moyen du procédé selon l'art antérieur décrit dans (Kimball, 2010). Les valeurs élevées du potentiel d'exploitation PE indiquent des zones favorables à l'exploitation de la ressource géothermique. On peut observer que la carte de prospectivité issue du procédé selon l'invention a une meilleure résolution spatiale que la carte de prospectivité issue du procédé selon l'art antérieur, pour laquelle on observe clairement l'empreinte de l'acquisition des données. Cela est d'autant plus surprenant que pour le procédé selon l'art antérieur, une taille de cellule beaucoup plus petite a été choisie pour la représentation maillée, à savoir 1km par 1km au lieu de 5km par 5km pour le procédé selon l'invention. Ainsi, l'utilisation d'un modèle de régression par apprentissage automatique du procédé selon l'invention au lieu d'une simple interpolation selon l'art antérieur permet d'améliorer la résolution spatiale de la carte de prospectivité finale.

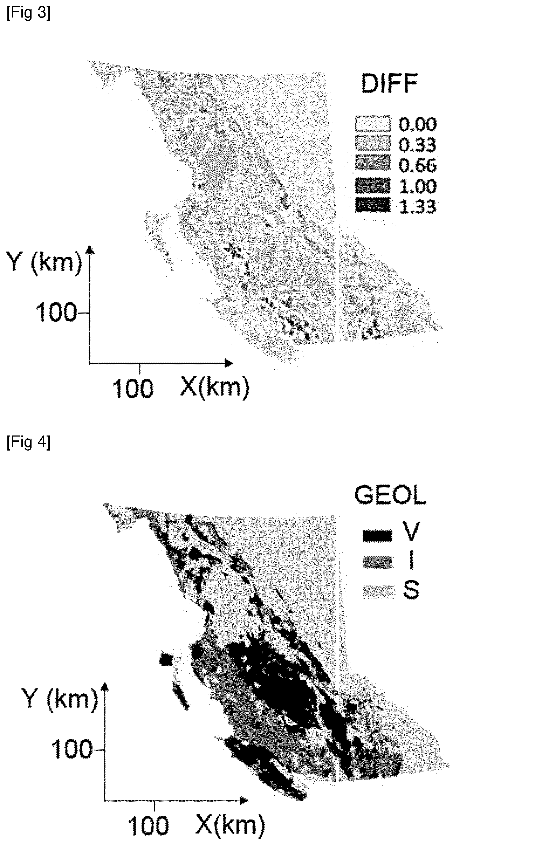

Les figures 3 et 4 illustrent l'importance d'utiliser des coefficients de pondération dépendant d'une contrainte géologique. Plus précisément, nous avons d'une part déterminé une première carte de prospectivité au moyen du procédé selon l'invention, c'est-à-dire au moyen de coefficients de pondération variables spatialement, en l'espèce déterminés à partir d'une carte géologique de la province de Colombie Britannique et selon l'étape 5) décrite ci-dessus. D'autre part, nous avons déterminé une deuxième carte de prospectivité au moyen d'une mise en œuvre modifiée du procédé selon l'invention, la modification consistant à attribuer, pour une propriété donnée, les mêmes coefficients de pondération en toute cellule, quelle que soit la nature lithologique. Plus précisément, la valeur du coefficient de pondération déterminé pour les formations sédimentaires a arbitrairement été choisi comme référence. La figure 3 correspond à la différence DIFF entre les cartes de prospectivité obtenues par le procédé selon l'invention et par la modification du procédé selon l'invention décrite ci-dessus. La figure 4 présente quant à elle la carte géologique de la province de Colombie Britannique. Plus précisément, la figure 4 présente la répartition, en fonction de la position (X,Y) à la surface de la formation, des lithologies suivantes : volcanique V, intrusive/métamorphique/ultramafique I, et sédimentaire S. On peut ainsi observer par comparaison de la figure 3 avec la figure 4 que la carte de la différence dépend de la géologie, et que la différence ne disparaît que pour les roches sédimentaires, qui a justement été pris comme référence. Ainsi, la carte de prospectivité déterminée au moyen du procédé selon l'invention prend bien en compte une contrainte géologique variable spatialement. Ceci est particulièrement avantageux car cela permet une prédiction du potentiel d'exploitation plus réaliste et plus fiable. On peut notamment observer que les différences sont les plus importantes dans la partie sud (positions avec les valeurs de Y les plus faibles) de la formation souterraine, où des lithologies les plus propices à la prospection géothermique sont présentes, à savoir des roches volcaniques, métamorphiques, ultramafiques et intrusives. Or c'est précisément dans cette zone que le procédé selon l'invention prédit un potentiel d'exploitation le plus élevé (cf. la figure 1), ce qui est attendu par un homme du métier.

Ainsi la prise en compte de contraintes géologiques permet une prédiction plus fiable, moins arbitraire, ce qui améliore la qualité de la décision prise à l'issue de l'analyse décisionnelle.

Enfin, la présente invention permet de très nettement améliorer la résolution spatiale de la carte de prospectivité.

## Revendications

1. Procédé pour exploiter une ressource présente dans une formation souterraine, dans lequel au moins les étapes suivantes sont appliquées :
a) on mesure des grandeurs physiques en des points de mesure de ladite formation au moyen de capteurs et on en déduit des valeurs de propriétés relatives à ladite formation en lesdits points de mesure ;
b) à partir desdites valeurs desdites propriétés relatives à ladite formation en lesdits points de mesure, on construit une représentation maillée représentative de ladite formation, chaque cellule de ladite représentation maillée comportant une valeur de chacune desdites propriétés ;
c) pour chacune desdites propriétés et en chaque cellule de ladite représentation maillée, on détermine une note représentative de la pertinence de la valeur de ladite propriété en ladite cellule pour l'exploitation de ladite ressource, à partir de critères prédéfinis pour chacune desdites propriétés ;
d) on détermine des ensembles de cellules de ladite représentation maillée en fonction d'une contrainte géologique variable spatialement, et on applique une méthode d'analyse hiérarchique des procédés pour chacun desdits ensembles de cellules afin de déterminer, pour chacun desdits ensembles de cellules, un ensemble de coefficients de pondération représentatifs de la pertinence relative de chacune desdites propriétés pour l'exploitation de ladite ressource dans lesdites cellules dudit ensemble de cellules ;
e) en chaque cellule de ladite représentation maillée, on détermine une note représentative du potentiel d'exploitation de ladite ressource comme étant égale à la somme des notes représentatives de la pertinence desdites valeurs desdites propriétés en ladite maille pour l'exploitation de ladite ressource et pondérées par lesdits coefficients de pondération dudit ensemble de coefficients de pondération déterminés pour lesdites propriétés et pour ledit ensemble de cellules auquel appartient ladite cellule ;
f) à partir au moins desdites notes représentatives du potentiel d'exploitation déterminées en chacune des cellules de ladite représentation maillée, on détermine un schéma d'exploitation de ladite ressource et on exploite ladite ressource selon ledit schéma d'exploitation.

2. Procédé selon la revendication 1, dans lequel, à l'étape b), lesdites valeurs en chaque cellule d'au moins une desdites propriétés sont déterminées au moyen d'une méthode d'apprentissage automatique supervisé.

3. Procédé selon l'une des revendications précédentes, dans lequel ladite méthode d'apprentissage automatique supervisé est choisie parmi la liste suivante : une méthode d'amplification de gradient, une méthode d'amplification extrême de gradient, un réseau de neurones à propagation avant, et un réseau de neurones convolutif.

4. Procédé selon l'une des revendications précédentes, et dans lequel lesdites mesures desdites grandeurs physiques comprennent au moins des mesures diagraphiques et des mesures sismiques.

5. Procédé selon l'une des revendications précédentes, dans lequel ladite ressource est une ressource géothermique, et dans lequel lesdites propriétés comprennent au moins un gradient thermique et un flux de chaleur.

6. Procédé selon la revendication 5, dans lequel on détermine lesdits ensembles de cellules à partir d'une carte géologique relative à ladite formation, et de telle manière que la lithologie soit invariante dans chaque cellule d'un ensemble de cellules.

7. Procédé selon l'une des revendications 1 à 4, dans lequel ladite ressource est une ressource gazière et/ou pétrolière, et dans lequel lesdites propriétés comprennent au moins une porosité et une perméabilité.

8. Procédé selon la revendication 7, dans lequel on détermine lesdits ensembles de cellules à partir d'une carte de la distribution des hydrocarbures dans ladite formation, et de telle manière que la distribution des hydrocarbures soit invariante dans chaque cellule d'un ensemble de cellules.

9. Procédé selon l'une des revendications précédentes, dans lequel, à l'étape f), on détermine un schéma d'exploitation de ladite ressource comprenant au moins une implantation d'au moins un puits injecteur et/ou d'au moins un puits producteur, et on exploite ladite ressource de ladite formation souterraine au moins en forant lesdits puits de ladite implantation et en les équipant d'infrastructures d'exploitation.

10. Produit programme d'ordinateur téléchargeable depuis un réseau de communication et/ou enregistré sur un support lisible par ordinateur et/ou exécutable par un processeur, comprenant des instructions de code de programme pour la mise en œuvre au moins des étapes b) à e) du procédé selon l'une des revendications 1 à 9, lorsque ledit programme est exécuté sur un ordinateur.

## Patentansprüche

1. Verfahren zum Fördern einer Ressource, die in einer unterirdischen Formation vorkommt, wobei mindestens die folgenden Schritte angewendet werden:
a) Messen von physikalischen Größen an Messpunkten der Formation mit Hilfe von Sensoren und daraus Ableiten von Werten von Eigenschaften bezüglich der Formation an den Messpunkten;
b) anhand der Werte der Eigenschaften bezüglich der Formation an den Messpunkten, Erstellen einer Netzdarstellung, die für die Formation repräsentativ ist, wobei jede Zelle der Netzdarstellung einen Wert jeder der Eigenschaften umfasst;
c) für jede der Eigenschaften und in jeder Zelle der Netzdarstellung, Bestimmen einer Note, die für die Relevanz des Werts der Eigenschaft in der Zelle in Bezug auf die Förderung der Ressource repräsentativ ist, anhand von vordefinierten Kriterien für jede der Eigenschaften;
d) Bestimmen von Sätzen Zellen der Netzdarstellung in Abhängigkeit von einer räumlich variablen geologischen Einschränkung und Anwenden einer Methode zur hierarchischen Analyse der Verfahren für jeden der Sätze Zellen, um für jeden der Sätze Zellen einen Satz Gewichtungskoeffizienten zu bestimmen, die für die relative Relevanz jeder der Eigenschaften in Bezug auf die Förderung der Ressource in den Zellen des Satzes Zellen repräsentativ sind;
e) in jeder Zelle der Netzdarstellung, Bestimmen einer Note, die für das Förderungspotenzial der Ressource repräsentativ ist, als die Summe der Noten, die für die Relevanz der Werte der Eigenschaften in dem Netz in Bezug auf die Förderung der Ressource repräsentativ sind und durch die Gewichtungskoeffizienten des Satzes Gewichtungskoeffizienten, die für die Eigenschaften und für den Satz Zellen, zu dem die Zelle gehört, bestimmt wurden, gewichtet wurden;
f) anhand mindestens der Noten, die für das Förderungspotenzial repräsentativ sind und in jeder der Zellen der Netzdarstellung bestimmt wurden, Bestimmen eines Förderungsschemas für die Ressource und Fördern der Ressource gemäß dem Förderungsschema.

2. Verfahren nach Anspruch 1, wobei in Schritt b) die Werte in jeder Zelle von mindestens einer der Eigenschaften mit Hilfe einer Methode zum überwachten maschinellen Lernen bestimmt werden.

3. Verfahren nach einem der vorhergehenden Ansprüche, wobei die Methode zum überwachten maschinellen Lernen aus der folgenden Liste ausgewählt wird: einer Gradient-Boosting-Methode, einer Extreme-Gradient-Boosting-Methode, einem neuronalen Netz mit Vorwärts-Propagierung und einem faltenden neuronalen Netz.

4. Verfahren nach einem der vorhergehenden Ansprüche, und wobei die Messungen der physikalischen Größen mindestens Bohrlochmessungen und seismische Messungen beinhalten.

5. Verfahren nach einem der vorhergehenden Ansprüche, wobei die Ressource eine geothermische Ressource ist und wobei die Eigenschaften mindestens einen Temperaturgradienten und einen Wärmestrom beinhalten.

6. Verfahren nach Anspruch 5, wobei die Sätze Zellen anhand einer geologischen Karte bezüglich der Formation bestimmt werden und so, dass die Lithologie in jeder Zelle eines Satzes Zellen unveränderlich ist.

7. Verfahren nach einem der Ansprüche 1 bis 4, wobei die Ressource eine Gas- und/oder Erdölressource ist und wobei die Eigenschaften mindestens eine Porosität und eine Permeabilität beinhalten.

8. Verfahren nach Anspruch 7, wobei die Sätze Zellen anhand einer Karte der Verteilung der Kohlenwasserstoffe in der Formation bestimmt werden und so, dass die Verteilung der Kohlenwasserstoffe in jeder Zelle eines Satzes Zellen unveränderlich ist.

9. Verfahren nach einem der vorhergehenden Ansprüche, wobei in Schritt f) ein Förderungsschema für die Ressource bestimmt wird, das mindestens ein Layout mindestens einer Injektionsbohrung und/oder mindestens einer Produktionsbohrung beinhaltet, und die Ressource der unterirdischen Formation mindestens durch das Bohren der Bohrungen des Layouts und deren Ausrüstung mit Förderungsinfrastruktur gefördert wird.

10. Computerprogrammprodukt, das aus einem Kommunikationsnetzwerk heruntergeladen werden kann und/oder auf einem computerlesbaren Medium aufgezeichnet ist und/oder durch einen Prozessor ausführbar ist und das Programmcodeanweisungen für die Umsetzung mindestens der Schritte b) bis e) des Verfahrens nach einem der Ansprüche 1 bis 9 beinhaltet, wenn das Programm auf einem Computer ausgeführt wird.

## Claims

1. Method for extracting a resource present in a subterranean formation, wherein at least the following steps are applied:
a) physical quantities are measured at measurement points of said formation by means of sensors and values of properties relating to said formation at said measurement points are derived therefrom;
b) based on said values of said properties relating to said formation at said measurement points, a mesh representation representative of said formation is constructed, each cell of said mesh representation comprising a value of each of said properties;
c) for each of said properties and in each cell of said mesh representation, a score representative of the relevance of the value of said property in said cell to the extraction of said resource is determined, based on predefined criteria for each of said properties;
d) sets of cells of said mesh representation are determined depending on a spatially varying geological constraint, and an analytical hierarchy process is applied to each of said sets of cells in order to determine, for each of said sets of cells, a set of weighting coefficients representative of the relative relevance of each of said properties to the extraction of said resource from said cells of said set of cells;
e) for each cell of said mesh representation, a score representative of the extraction potential of said resource is determined as being equal to the sum of the scores representative of the relevance of said values of said properties in said cell to the extraction of said resource weighted by said weighting coefficients of said set of weighting coefficients determined for said properties and for said set of cells to which said cell belongs;
f) based at least on said scores representative of the extraction potential determined for each of the cells of said mesh representation, a scheme of extraction of said resource is determined and said resource is extracted according to said extraction scheme.

2. Method according to Claim 1, wherein, in step b), said values in each cell of at least one of said properties are determined by means of a supervised machine-learning method.

3. Method according to either of the preceding claims, wherein said supervised machine-learning method is selected from the following list: a gradient-boosting method, an extreme gradient-boosting method, a feedforward neural network, and a convolutional neural network.

4. Method according to any of the preceding claims, and wherein said measurements of said physical quantities comprise at least log measurements and seismic measurements.

5. Method according to any of the preceding claims, wherein said resource is a geothermal resource, and wherein said properties comprise at least a thermal gradient and a heat flux.

6. Method according to Claim 5, wherein said sets of cells are determined from a geological map relating to said formation, and in such a way that lithology is invariant in each cell of a set of cells.

7. Method according to any of Claims 1 to 4, wherein said resource is a gas and/or petroleum resource, and wherein said properties comprise at least a porosity and a permeability.

8. Method according to Claim 7, wherein said sets of cells are determined from a map of the hydrocarbon distribution in said formation, and in such a way that the hydrocarbon distribution is invariant in each cell of a set of cells.

9. Method according to any of the preceding claims, wherein, in step f), a scheme of extraction of said resource comprising at least a layout of at least one injector well and/or of at least one producer well is determined, and said resource is extracted from said subterranean formation at least by drilling said wells with said layout and equipping them with extraction infrastructures.

10. Computer program product downloadable from a communication network and/or recorded on a medium that is readable by computer and/or executable by a processor, comprising program code instructions for implementing at least steps b) to e) of the method according to any of Claims 1 to 9, when said program is executed on a computer.
